# EUROPÄISCHE PATENTSCHRIFT

(11) **EP 1 855 253 B1**
(45) Veröffentlichungstag und Bekanntmachung des Hinweises auf die Patenterteilung: **13.11.2013**
(21) Anmeldenummer: 07008936.2
(22) Anmeldetag: 03.05.2007
(51) Int. Cl.: G07C 3/00, G01D 4/00, G01F 15/00, G01R 11/24, G01R 22/06, H02B 1/03, G09F 3/03

(54) **Montageanordnung mit einem an einem Erfassungsort montierten Elektrizitätszähler**
Mounting assembly comprising an electricity meter installed at a metering site
Dispostif de montage comprenant un compteur d'énergie installé à un lieu de comptage

(30) Priorität: 05.05.2006 DE 102006021324
(43) Veröffentlichungstag der Anmeldung: 14.11.2007
(73) Patentinhaber: ITF-EDV Fröschl GmbH, 93194 Walderbach (DE)
(72) Erfinder: Zintl, Peter, 93093 Obertraubling (DE)
(74) Vertreter: Graf Glück Kritzenberger

(56) Entgegenhaltungen:
- EP-A1- 1 748 282
- EP-A2- 0 863 489
- EP-A2- 1 384 975
- WO-A1-03/023415
- DE-U1- 20 306 150
- US-B1- 6 778 099

## Beschreibung

Die Erfindung bezieht sich auf eine Montageanordnung mit einem an einem Erfassungsort montierten Elekbrizitätszähler gemäß Oberbegriff Patentanspruch 1.

Bekannt ist ein Verbrauchszähler in Form eines Elektrizitätszähler (DE 102 33 721 A1), der die Merkmale des Oberbegriffs des Patentanspruchs 1 aufweist und bei dem an der Außenfläche eines Zählergehäuses ein RFID-TAG abnehmbar vorgesehen ist, in welchen mit Hilfe einer im Zählergehäuse angeordneten Schreib- und Leseeinheit die den Verbrauch betreffenden Daten eingeschrieben werden können und welcher dann zur Vereinfachung des Ablesens des Verbrauchszählers an eine zentrale Abrechnungsstelle weitergeleitet werden kann.

Bekannt ist auch eine Montageanordnung (DE 203 06 150 U), die im Wesentlichen aus einem an einem Heizkörper fest montierten Verbrauchszähler sowie aus einer ebenfalls am Erfassungsort bzw. an dem dortigen Heizkörper allerdings abnehmbar befestigten Informationseinheit in Form eines SMART-Labels besteht. Die vom Verbrauchszähler ermittelten Verbrauchswerte werden zusammen mit den Erfassungsort bzw. den Heizkörper identifizierenden Daten drahtlos an das SMART-Label übertragen und in einem dortigen Speicher abgespeichert. Am Ende einer jeden Abrechnungsperiode wird das SMART-Label vom Heizkörper abgenommen und für die Abrechnung des Verbrauchs an eine Abrechnungsstelle weitergeleitet. Mit dieser bekannten Anordnung soll eine Vereinfachung des Auslesens von Verbrauchszählern erreicht werden.

Insbesondere bei Elektrizitätszählern zur Erfassung des Verbrauchs an elektrischer Energie ist auch bekannt, für die Montage Montageplatten zu verwenden, die beispielsweise Teil eines Montage- oder Geräteschrankes sind und an dem Zähl- bzw. Messort, d.h. am Erfassungsort beispielsweise in einem Gebäude des jeweiligen Verbrauchers bzw. Energie- oder Stromkunden fest montiert sind. Auf der Montageplatte wird dann der jeweilige Zähler montiert.

U.a. für die zuverlässige Auswertung der von dem jeweiligen Elektrizitätszähler gelieferten Daten ist vielfach eine genaue Kenntnis des Erfassungsortes erforderlich bzw. es ist notwendig, den Erfassungsort zu berücksichtigen. Weiterhin ist es für eine zuverlässige Erfassung und/oder Auswertung der von einem Elektrizitätszähler gelieferten Daten auch wesentlich, dass Manipulationen am Elektrizitätszähler zuverlässig erkannt werden.

Aufgabe der Erfindung ist es, eine Montageanordnung für einen Verbrauchszähler in Form eines Elektrizitätszählers aufzuzeigen, die eine eindeutige automatische Zuordnung des jeweiligen Verbrauchszählers und des zugehörigen Erfassungsortes ermöglicht. Zur Lösung dieser Aufgabe ist eine Montageanordnung entsprechend dem Patentanspruch 1 ausgebildet.

Die Erfindung bezieht sich zunächst auf eine Montageanordnung mit einer am Erfassungsort fest montierten Montageplatte, wobei in oder an der Montageplatte die wenigstens eine Informationseinheit mit ihrem nicht flüchtigen Speicher zur Speicherung von den Erfassungsort identifizierenden Informationen und/oder Daten unzugänglich vorgesehen ist und das Elektrizitätszähler wenigstens eine Leseeinheit zum Auslesen dieser Daten besitzt. Die Informationseinheit ist bevorzugt von einem RFID-TAG gebildet.

Der Elektrizitätszähler ist beispielsweise weiterhin mit wenigstens einer elektronischen Sicherung oder Plombierung ausgebildet. Die elektronische Sicherung bzw. Plombierung dient zur Sicherung wenigstens eines zugangsgeschützten Raumes und besteht aus einer informationseinheit mit einem nicht flüchtigen Speicher zur Speicherung von die Sicherung und/oder deren Zustand Identifizierenden Informationen. Im Elektrizitätszähler ist wenigstens eine Leseeinheit zum Auslesen der Daten aus der Informationseinheit vorgesehen sowie bevorzugt auch zur Übermittlung dieser Daten über eine Datenfernübertragung. Die Informationseinheit, die auch bei dieser Ausführungsform bevorzugt von einem RFID-TAG gebildet ist, ist dabei so ausgeführt, dass bei einem Öffnen des zugangsgeschützten Raumes zwangsläufig ein Zerstören der Plombierung, d.h. ein Zerstören eines wesentliches Funktionselement dieser Informationseinheit erfolgt Dieser Zustand wird dann von der Leseeinheit erfasst, Im Elektrizitätszähler abgespeichert und/oder über eine Datenfernübertragung an eine zentrale Überwachungs- und/oder Datenerfassungseinheit übertragen.

Ein Elektrizitätszähler im Sinne der Erfindung ist ganz allgemein ein Gerät, welches unter Verwendung einer Mess- und/oder Sensoreinheit Mess- und/oder Sensordaten liefert, die dann gegebenenfalls mit weiteren, auch den Elektrizitätszähler, dessen Eigenschaften usw. betreffenden Daten für Auswertungs- und/oder Überwachungszwecke weitergeleitet werden. Ein Elektrizitätszähler im Sinne der Erfindung ist insbesondere ein Gerät, welches über eine Datenfernübertragung erreichbar ist, und zwar insbesondere auch zum Auslesen bzw. zum Übertragen der von dem Gerät gelieferten Daten an wenigstens eine zentrale Verwaltungs- und/oder Auswertstation.

Unter Montageplatte im Sinne der Erfindung ist jede Einrichtung zu verstehen, die an dem jeweiligen Erfassungs- oder Zählort fest montiert wird und an der dann der jeweilige Elektrizitätszähler austauschbar befestigt ist.

Mit der erfindungsgemäßen Ausbildung ist eine eindeutige, automatisch und fehlerfreie Zuordnung des jeweiligen Erfassungs- oder Zählortes und des Erfassungs- und Zählgerätes möglich.

In Weiterbildung der Erfindung ist es auch möglich,
dass der Elektrizitätszähler innerhalb eines Gehäuses wenigstens einen zugangsgeschützten Raum bildet, dass der zugangsgeschützte Raum durch wenigstens eine elektronische Plombierung geschützt ist, und dass die elektronische Plombierung ebenfalls von einer Informationseinheit gebildet ist,
und/oder
dass die Informationseinheit und die Leseeinheit für eine kontaktlose Datenübertragung, vorzugsweise für eine Datenübertragung über Funk ausgebildet sind,
und/oder
dass die Informationseinheit und/oder die wenigstens eine elektronische Plamblerung ein RFID-TAG ist,
und/oder
dass die Informationseinheit an oder in einer Wandung des Gehäuses untergebracht ist,
und/oder
dass im Elektrizitätszähler ein Speicher zum Speichern oder Zwischenspeichern der aus der Informationseinheit ausgelesenen Informationen vorgesehen ist, und/oder
dass die Leseeinheit eine Lese-/Schreibeinheit ist, die ebenso wie die

Informationseinheit für eine bidirektionale Datenübertragung ausgebildet ist, wobei die vorgenanten Merkmale sowohl bei der Montageanordnung, als auch bei dem Elektrizitätszähler jeweils einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

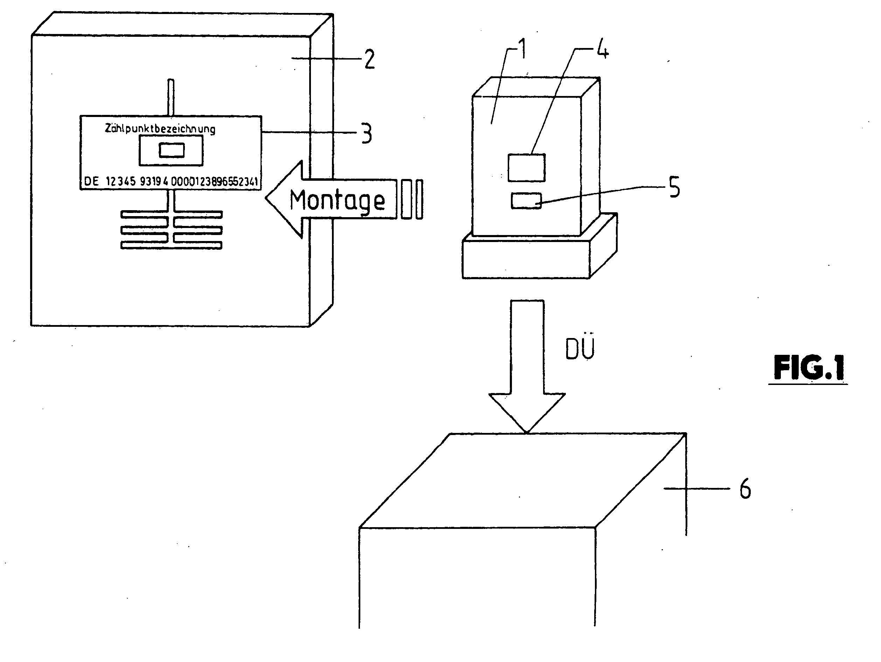

- Fig. 1: in vereinfachter Darstellung ein Erfassungsgerät in Form eines Zählgerätes zusammen mit einer Montageplatte für dieses Gerät;
- Fig. 2: das Erfassungsgerät in Seitenansicht.

In den Figuren ist 1 ein Erfassungs- oder Zählgerät in Form eines Elektrizitätszählers, mit dem der Verbrauch an elektrischer Energie bei einem Abnehmer (Stromkunden) erfasst wird. Das Zählgerät 1 ist über eine Datenfernübertragung erreichbar, und zwar zur Übertragung u.a. der Verbrauchs- und/oder abrechnungsrelevanten Daten sowie auch weiterer Daten an einen vom Zählgerät 1 räumlich entfernten Empfänger, wobei die Übertragung beispielsweise auf Anforderung von einer zentralen Verwaltungseinheit erfolgt. Insoweit entspricht das Zählgerät 1 beispielsweise einem üblichen systemfähigen Elektrozähler.

Für die Montage des Zählgerätes 1 dient eine Montageplatte 2, die dort montiert ist, wo das Zählgerät 1 örtlich vorgesehen ist, d.h. bei Ausbildung des Zählgerätes 1 als Elektrozähler bei dem jeweiligen Kunden. An der Montageplatte 2 sind u.a. sämtliche Anschlüsse für das Zählgerät 1 vorgesehen, einschließlich der für die Datenfernübertragung notwendigen Anschlüsse oder Einrichtungen. Insoweit weist die Montageplatte 2 die bei Elektrizitätszählern übliche Ausbildung auf, z.B. auch als Teil eines Geräteschranks.

Eine Besonderheit besteht darin, dass an oder in der Montageplatte 2 ein sogenannter RFID-Schaltkreis oder RFID-TAG 3 vorgesehen ist, und zwar derart, dass dieser RFID-TAG 3 nicht oder allenfalls nur für autorisierte Personen zugänglich ist. Bei dem RFID-TAG 3 handelt es sich um ein elektronisches Bauelement, welches im Wesentlichen aus einer als Antenne ausgebildeten Struktur und aus einer u.a. auch einen Speicher aufweisenden Elektronik in Form eines integrierten Schaltkreises besteht. Die Elektronik ist dabei so ausgeführt, dass sie die für ihren Betrieb notwendige Versorgungsspannung aus dem über die Antennenstruktur empfangenen Radio- oder HF-Signal (elektromagnetische Welle) selbst erzeugt und außerdem einen draht- und kontaktlosen Datentransfer ermöglicht. Im Speicher des RFID-TAG 3 sind u.a. die Montageplatte 2 und/oder deren Ort identifizierende Informationen nicht flüchtig gespeichert, d.h. bei Verwendung der Montageplatte 2 für ein Zählgerät u.a. Informationen, die den Zählpunkt identifizieren.

Im Zählgerät 1, d.h. in einem nach außen hin geschlossenen Gehäuseinnenraum ist eine Lese- und Schreibeinheit 4 vorgesehen, die mit dem RFID-TAG 3 zusammen wirkt, und zwar für einen draht- und kontaktlosen bidirektionalen Datentransfer zwischen dem RFID-TAG 3 und dieser Schreib- und Leseeinheit 4, insbesondere auch zum Auslesen der Daten aus dem Speicher des RFID-TAG. Die Lese- und Schreibeinheit 4 ist dabei so ausgebildet, dass sie nicht nur den draht- und kontaktlosen Datentransfer ermöglichen, sondern zugleich an der Antennenstruktur des RFID-TAGs 3 auch die für die Erzeugung der notwendigen Versorgungsspannung erforderliche Leistung zur Verfügung stellt.

Die von der Schreib- und Leseeinheit ausgelesenen und die Montageplatte 2 bzw. deren örtliche Lage identifizierenden Daten und Informationen werden in einem Speicher 5 des Zählgerätes 1 abgespeichert, sodass diese Daten und Informationen dann zusammen mit weiteren Daten des Zählgerätes, nämlich mit den Zählwerten, der Gerätenummer des Zählgerätes 1 usw. über die Datenfernübertragung (Pfeil DÜ) beispielsweise an eine zentrale Verwaltungseinheit 6 übertragen werden können. Für die Datenfernübertragung sind die unterschiedlichsten Wege und/oder Verfahren möglich.

Durch die beschriebene Ausbildung des Zählgerätes 1 und der Montageplatte 2 ist eine automatische und fehlerfreie Zuordnung des Zählortes und des Zählgerätes gewährleistet. Beim Einsatz systemfähiger Zählgeräte, die per Datenfernübertragung erreichbar sind, kann somit der Montagevorgang des jeweiligen Zählgerätes im Sinne von "Plug&Play" vollständig automatisiert werden. Zuordnungsfehler zwischen Zählpunkten und Zählgeräte sind ausgeschlossen.

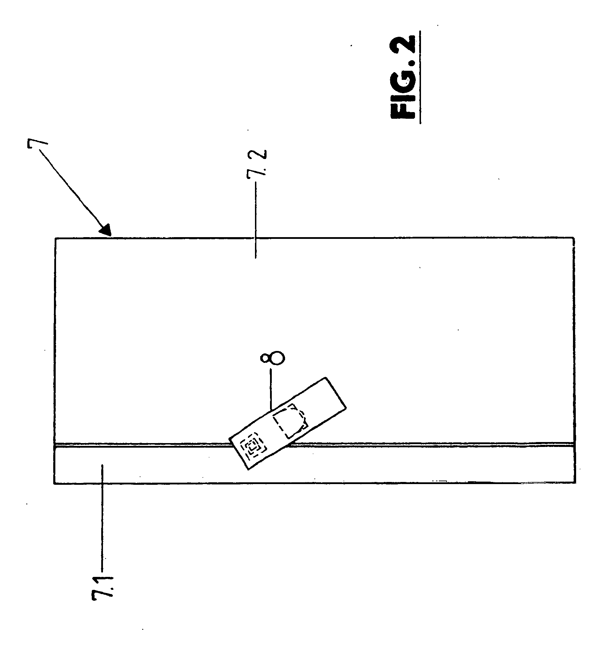

Die Figur 2 zeigt nochmals in vereinfachter Darstellung das Zählgerät 1, welches im Inneren seines Gehäuses 7 wenigstens einen zugangsgeschützten Raum bildet. Das Gehäuse 7 kann von berechtigten Personen geöffnet werden und ist hierfür bei der dargestellten Ausführungsform zweiteilig bestehend aus den miteinander verbundenen Gehäuseteilen 7.1 und 7.2 ausgeführt. Zum Plombieren bzw. Sichern des Gehäuseinnenraumes ist an der Außenseite des Gehäuses 7 wenigstens eine elektronische Plombierung 8 so vorgesehen, dass diese Plombierung den Übergang zwischen den beiden Gehäuseteilen 7.1 und 7.2 überlappt. Die elektronische Sicherung ist wiederum ein RFID-Schaltkreis oder RFID-TAG. Im Speicher der elektronischen Sicherung 8 sind diese Sicherung und deren Zustand identifizierende Informationen nicht flüchtig gespeichert. Die elektronische Sicherung 8 wirkt ebenfalls mit der Schreib- und Leseeinheit 4 im Zählgerät 1 zusammen, und zwar in der Form, dass die Informationen bzw. Daten in dem Speicher der elektronischen Sicherung 8 bzw. des diese Sicherung bildenden RFID-TAGs von der Schreib- und Leseeinheit 4 draht- und kontaktlos als Radio- oder HF-Signal (elektromagnetische Welle) ausgelesen und beispielsweise über eine Datenfernübertragung an eine zentrale Recheneinheit z.B. einer Kontroll- und Überwachungszentrale übermittelt werden. Hierbei besteht auch die Möglichkeit, dass über die Datenfernübertragung und die Lese- und Schreibeinheit 4 des Zählgerätes 1 zumindest Teile der im Speicher der elektronischen Sicherung 8 abgelegten Informationen periodisch geändert werden, beispielsweise zur Erhöhung der Sicherheit gegen unerwünschte Manipulationen.

Die elektronische Sicherung 8 bzw. der diese Sicherung bildende RFID-TAG ist so an dem Gehäuse 7 angebracht, dass das Entfernen der Sicherung 8 vom Gehäuse 7 und/oder das Öffnen des Gehäuses 7 nicht ohne eine Zerstörung eines wesentlichen Funktionselementes der elektronischen Sicherung 8, beispielsweise nicht ohne eine Zerstörung der Antennenstruktur und/oder des integrierten Schaltkreises des RFID-TAGs möglich ist. Jede unerlaubte Manipulation bzw. Zerstörung der elektronischen Sicherung 8 wird somit über die Schreib- und Leseeinheit 4 erkannt, so dass die Manipulation z.B. am Gerät 1 angezeigt und/oder über die Datenfernübertragung unverzüglich an die Datenerfassungs- und/oder Überwachungszentrale gemeldet werden kann.

### Bezugszeichenliste

- 1: Zählgerät
- 2: Montageelement oder Montageplatte
- 3: Informationsträger, beispielsweise RFID-TAG
- 4: Schreib- und Leseeinheit
- 5: Speicher
- 6: zentrale Verwaltungseinheit
- 7: Gehäuse
- 7.1, 7.2: Gehäuseteil
- 8: elektronischen Plombierung oder Sicherung

## Patentansprüche

1. Montageanordnung mit einem an einem Erfassungsort montierten Elektrizitätszähler (1), in dem wenigstens eine Leseeinheit (4) zum Ein- und/oder Auslesen von Daten in bzw. aus einer Informationseinheit (3) mit einem eine Wandung Speicher zur Speicherung von den Erfassungsort identifizierenden Daten vorgesehen ist, wobei die Informationseinheit (3) und die Leseeinheit (4) für eine kontaktlose Datenübertragung ausgebildet sind, und wobei der Elektrizitätszähler (1) für eine Datenfernübertragung zumindest von mit diesem Zähler erfassten Erfassungsdaten und der Daten der Informationseinheit (3) ausgebildet ist,
**gekennzeichnet**
**durch** eine am Erfassungsort fest montierte Montageplatte (2), an der der Elektrizitätszähler (1) austauschbar befestigt ist, wobei die Informationseinheit (3) mit ihrem nicht flüchtigen Speicher im Inneren der Montageplatte (2) oder in einem gesicherten Raum der Montageplatte (2) nicht zugänglich untergebracht und/oder in nicht flüchtigen der Montageplatte (2) nicht zugänglich eingeschlossen oder eingegossen ist.

2. Montageanordnung nach Anspruch 1, **dadurch gekennzeichnet, dass** der Elektrlzitätszähler (1) innerhalb eines Gehäuses (7) wenigstens einen zugangsgeschützten Raum bildet, dass der zugangsgeschützte Raum durch wenigstens eine elektronische Plombierung (8) geschützt ist, und dass die elektronische Plombierung (8) ebenfalls von einer Informationseinheit gebildet ist.

3. Montageanordnung nach Anspruch 1 oder 2, **dadurch gekennzeichnet, dass** die Informationseinheit (3, 8) ein RFID-TAG (3) ist.

4. Montageanordnung nach einem der vorhergehenden Ansprüche, **dadurch gekennzeichnet,**
**dass** im Elektrizitätszähler (1) ein Speicher zum Speichern oder Zwischenspeichern der aus der Informationseinheit (3, 8) ausgelesenen Informationen vorgesehen ist.

5. Montageanordnung nach einem der vorhergehenden Ansprüche, **dadurch gekennzeichnet, dass** die Leseeinheit eine Lese-/Schreibeinheit (4) ist, die ebenso wie die Informationseinheit (3, 8) für eine bidirektionale Datenübertragung ausgebildet ist.

## Claims

1. Installation assembly with an electricity meter (1) mounted at a register site in which at least one reader unit (4) for inputting and/or retrieving data into and from a data unit (3) is provided with a non-volatile memory for storing data identifying the register site, wherein the data unit (3) and the reader unit (4) are designed for contactless data transmission, and wherein the electricity meter (1) is designed for remote data transmission of at least the registered data recorded by this meter and of the data of the data unit (3), **characterised by** an installation plate (2) which is fixedly mounted at the register site and on which the electricity meter (1) is interchangeably fastened wherein the data unit (3) with its non-volatile memory is housed non-accessible inside the installation plate (2) or in a secured space in the installation plate (2) and/or is enclosed or cast non-accessible in a wall of the installation plate (2).

2. Installation assembly according to claim 1 **characterised in that** the electricity meter (1) forms at least one access-protected space inside a housing (7), that the access-protected space is protected by at least one electronic lead seal (8) and that the electronic lead seal (8) is likewise formed by a data unit.

3. Installation assembly according to claim 1 or 2 **characterised in that** the data unit (3, 8) is an RFID TAG (3).

4. Installation assembly according to one of the preceding claims **characterised in that** a memory for storing or temporary storing the data retrieved from the data unit (3, 8) is provided in the electricity meter (1).

5. Installation assembly according to one of the preceding claims **characterised in that** the reader unit is a read/write unit (4) which like the data unit (3, 8) is designed for bi-directional data transmission.

## Revendications

1. Agencement de montage avec un compteur électrique (1) monté au niveau d'un emplacement de détection, dans lequel l'on prévoit au moins une unité de lecture (4), destinée à inscrire ou extraire des données dans, ou respectivement depuis, une unité d'information (3), avec une mémoire non volatile, destinée à sauvegarder des données à identifier provenant de l'emplacement de détection, auquel cas l'unité d'information (3) et l'unité de lecture (4) sont formées de sorte à permettre une transmission de données sans contact, et auquel cas le compteur électrique (1) est formé afin de permettre la télétransmission au moins de données de détection saisies avec le compteur et de données de l'unité d'information (3),
**caractérisé par**
une plaque de montage (2) qui est montée au niveau de l'emplacement de détection, à laquelle est fixé le compteur électrique (1) de manière interchangeable, auquel cas l'unité d'information (3), avec sa mémoire non volatile, est logée, de manière non accessible, à l'intérieur de la plaque de montage (2) ou dans un espace sécurisé de la plaque de montage (2), et/ou elle est contenue ou moulée, de manière non accessible, dans une paroi de la plaque de montage (2).

2. Agencement de montage selon la revendication 1, **caractérisé en ce que** le compteur électrique (1) forme, à l'intérieur d'un logement (7), au moins un espace à accès protégé et que l'espace à accès protégé est protégé par au moins un plombage électronique (8) et que le plombage électronique (8) est formé également par une unité d'information.

3. Agencement de montage selon la revendication 1 ou 2, **caractérisé en ce que** l'unité d'information (3,8) est une étiquette RFID (3).

4. Agencement de montage selon une des revendications précédentes,
**caractérisé en ce que**
l'on prévoit qu'une mémoire dans le compteur électrique (1) dans le but de sauvegarder ou sauvegarder de manière temporaire les informations extraite de l'unité d'information (3, 8).

5. Agencement de montage selon une des revendications précédentes,
caractérisé en ce l'unité de lecture est une unité d'écriture/de lecture (4), laquelle est également formée, comme l'unité d'information (3, 8), afin de transmettre des données de manière bidirectionnelle.
